# EUROPEAN PATENT APPLICATION

(11) **EP 4 106 490 A1**
(43) Date of publication of application: **21.12.2022**
(21) Application number: 21179396.3
(22) Date of filing: 15.06.2021
(51) Int. Cl.: H05B 6/06

(54) **INDUCTION COOKING APPLIANCE**

(71) Applicant: AKTIEBOLAGET ELECTROLUX, 105 45 Stockholm (SE)
(72) Inventor: VIROLI, Alex, 47122 Forli (IT); NOSTRO, Massimo, 47100 Forli (IT); SCOTTO D'APOLLONIA, Adriano, 47122 Forli (IT); ZANGOLI, Massimo, 47100 Forli (IT); URGESE, Emanuel, 47122 Forli (IT); MENGOZZI, Alan, 47122 Forli (IT)
(74) Representative: Electrolux Group Patents

(57) **Abstract**

There is described an induction cooking appliance (1), in particular an induction cooking hob, for the thermal treatment of food products comprising at least a plurality of induction coils (2), each configured to generate a respective electromagnetic field and a power supply unit (3) coupled to the induction coils (3) and configured to selectively control an energy input into the induction coils (3). The power supply unit (3) comprises at least one power board assembly (13), each power board assembly (13) being configured to selectively control a plurality of respective induction coils (2). Each power board assembly (13) comprises at least a plurality of quasi-resonant generators (14), each one connected to at least one respective induction coil (2) for controlling operation of the respective induction coil (2), and one control unit (15) coupled to the quasi-resonant generators (14) and configured to control operation of the quasi-resonant generators (14). Each power board assembly (13) comprises more than four quasi-resonant generators (14).

## Description

The present invention relates to an induction cooking appliance, in particular an induction cooking hob, for the thermal treatment of food products.

Induction cooking appliances such as induction cooking hobs for the thermal treatment of food products are known household devices, which are conveniently efficient if compared with traditional gas or electric cooking appliances, because on the one side, they are accurate in controlling a cooking temperature and, on the other side, allow an uniform thermal treatment of the food product.

Induction cooking appliances typically comprise: a support plate provided with at least one cooking zone designed to heat a load, i.e. a cooking vessel containing the food product, placed on the support plate. The cooking zone comprises an induction coil for generating a time-varying electro-magnetic field inducing eddy currents in the load. The internal resistances of the load cause the induced eddy currents to generate heat within the loads.

Generally, the induction coil is powered by means of a power supply unit. The power supply unit comprises a generator operatively connected to the induction coil and configured to direct the required power to the respective induction coil.

There are also known induction cooking appliances having a plurality of cooking zones, each one having at least one induction coil. In these cases, the power supply unit is configured to selectively control operation of the induction coils.

There are also known induction cooking appliances having a plurality of induction coils, which are selectively controlled in order to dynamically define the cooking zone in function of the position of a cooking vessel being placed on the support plate.

While it is known to equip the induction cooking appliance of the last two kinds with so called half-bridge generators for their elevated performance, the first kind of induction cooking appliance is conveniently equipped with a single quasi-resonant generator, which, however, presents decreased performance characteristics in comparison to half-bridge generators.

Even though the known induction cooking appliances work satisfyingly well, a need is felt in the sector to improve the known induction cooking appliances.

According to the present invention, there is provided an induction cooking appliance according to the independent claim.

Preferred non-limiting embodiments are claimed in the claims directly or indirectly depending on the independent claim.

In addition, according to the present invention, there is provided an induction cooking appliance, in particular an induction cooking hob, for the thermal treatment of food products comprising at least:
- a plurality of induction coils, each configured to generate a respective electromagnetic field; and
- a power supply unit coupled to the induction coils and configured to selectively control an energy input into the induction coils, in particular for selectively generating the respective electromagnetic fields.

The power supply unit comprises at least one power board assembly, the power board assembly being configured to selectively control a plurality of respective induction coils.

Each power board assembly comprises at least a plurality of quasi-resonant generators, each one connected to at least one respective induction coil for controlling operation of the respective induction coil and one control unit coupled to the quasi-resonant generators and configured to control operation of the quasi-resonant generators.

Each power board assembly comprises more than four quasi-resonant generators.

By relying on power board assemblies, each having more than four quasi-resonant generators it is possible to reduce the costs associated to larger induction cooking appliances.

According to some possible non-limiting embodiments, each power board assembly only comprises generators of the quasi-resonant generator type.

As generators of the quasi-resonant type are economic, it is possible to further reduce the costs of such induction cooking appliances.

According to some possible non-limiting embodiments, at least four induction coils are associated to each power board assembly.

According to some possible non-limiting embodiments, each quasi-resonant generator comprises a respective quasi-resonant inverter circuit having a single power switching device, in particular a single Insulated Gate Bipolar Transistor.

As the costs of power switching devices are significant, by relying on a quasi-resonant inverter circuit with only a single power switching device, it is possible to keep the costs to a minimum.

According to some possible non-limiting embodiments, each power board assembly comprises a plurality of drivers, each one coupled to the respective control unit and one respective quasi-resonant generator for driving the respective quasi-resonant generator. Each control unit is configured to selectively send control signals to the respective drivers and each driver is configured to drive the respective quasi-resonant generator in dependence of the control signal.

This allows a precise control of the quasi-resonant generators such to precisely control the electromagnetic fields generated, in use, by the respective induction coils.

According to some possible non-limiting embodiments, each power board assembly comprises one power unit coupled and/or coupleable to an external power supply and the respective plurality of quasi-resonant generators and the respective induction coils.

In this way, the power board assemblies are provided with energy to be directed in a controlled manner to the induction coils. Preferentially but not necessarily, each power unit comprises a rectifier being coupled and/or coupleable to the external power supply and configured to convert an AC power signal provided by the external power supply into a rectified DC power signal. Each rectifier is coupled to the respective plurality of quasi-resonant generators and the respective plurality of induction coils.

The rectifier conditions the external energy supply such that the quasi-resonant generators can correctly and precisely work.

Preferentially but not necessarily, induction cooking appliance may further comprise a plurality of power board assemblies. The respective rectifier units are configured to be connected to the same main phase of the AC power signal and/or to different phases of the AC power signal.

By providing for more than one power board assembly it is possible to exploit the best, the characteristics of the external energy supply.

According to some possible non-limiting embodiments, induction cooking appliance may also comprise:
- a support plate for carrying one or more loads;
- a detection unit configured to detect a position of each load on the support plate; and
- a control device coupled to the detection unit and the one or more power board assemblies.

The control device is configured to control the power board assemblies as a function of the position of each load so as to energize these induction coils being adapted to interact with the loads.

In this way, one offers an induction cooking appliance coming along with an increased flexibility and reduced costs due to the combination of the detection unit, the control device and the quasi-resonant generators.

Preferentially but not necessarily, the detection unit is configured to detect a change of the position of one or more loads and the control device is configured to control the power board assemblies in dependence of the modified position or positions.

This allows to modify the control of the induction cooking appliance also in case of changes of the position of the cooking vessel(s) .

According to some possible non-limiting embodiments, each control unit comprises and/or consists of a microcontroller.

The microcontroller allows a precise control of the quasi-resonant generators.

One non-limiting embodiment of the present invention will now be described, by way of example, with reference to the accompanying drawings, in which:
- Figure 1 is a schematic sketch of an induction cooking appliance according to the present invention, with parts removed for clarity;
- Figure 2 is a schematic sketch of a portion of the induction cooking appliance of Figure 1, with parts removed for clarity; and
- Figures 3A and 3B are variations of the induction cooking appliance of Figure 1, with parts removed for clarity.

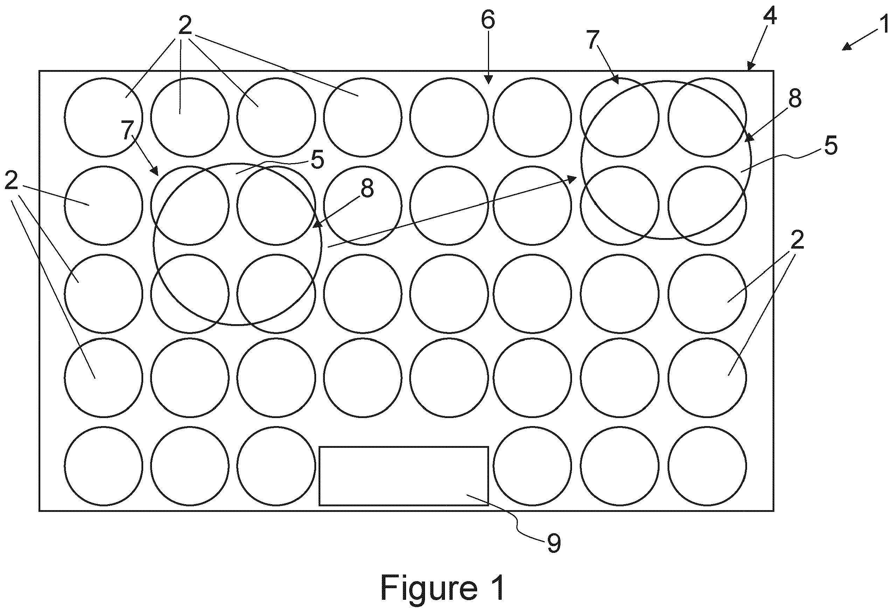

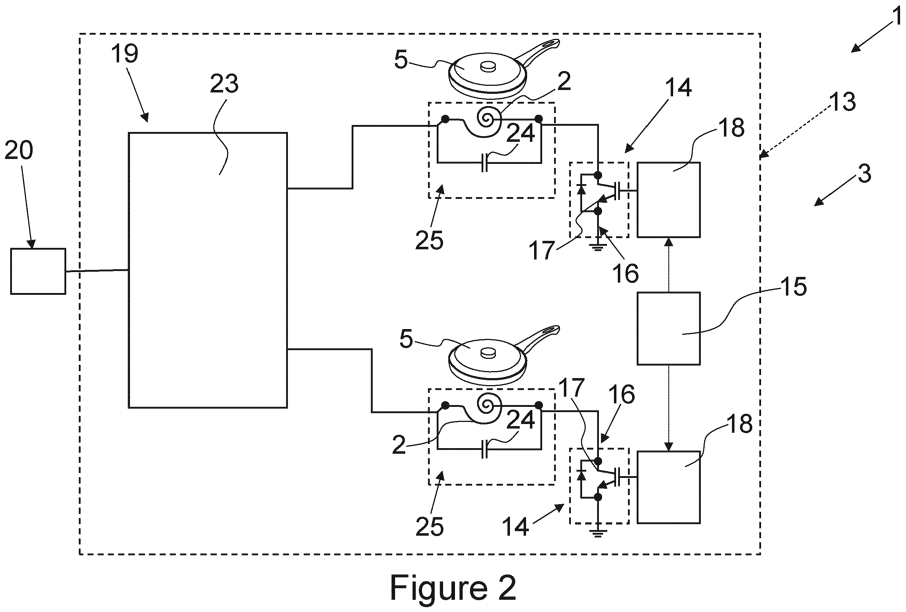

With particular reference to Figures 1 and 2, number 1 indicates as a whole an induction cooking appliance, in particular an induction cooking hob, for the thermal treatment, in particular for the heating and/or cooking, of food products.

According to some possible non-limiting embodiments, the food product to be thermally treated may be a single ingredient or a mixture of ingredients. It should also be noted that the food product to be treated may vary throughout the overall thermal treatment process; i.e. it may be possible to add or remove ingredients to the food product during the thermal treatment.

Induction cooking appliance 1 comprises at least:
- a plurality of induction coils 2, each configured to generate a respective electromagnetic field; and
- a power supply unit 3 coupled to induction coils 2 and configured to selectively control an energy input into induction coils 2, in particular for selectively controlling the respective electromagnetic field.

Furthermore, induction cooking appliance 1 may comprise a support plate 4, in particular having an horizontal orientation, being configured to support one or more loads, in particular one or more cooking vessels 5, to be heated.

Moreover, induction coils 3 are configured to generate the respective electromagnetic fields for generating eddy currents within cooking vessels 5.

In particular, each cooking vessel 5 is adapted to be heated by means of induction heating. Even more particular, each cooking vessel 5 may comprise (,in particular may substantially consist of) a magnetic and/or ferromagnetic material.

According to some possible non-limiting embodiments, each cooking vessel 5 can be of any type and form. A non-exhaustive list of cooking vessels 5 are pans, pots and kettles.

In further detail, support plate 4 may comprise a first face 6 designed to carry cooking vessels 5 and a second face opposed to first face 6.

Moreover, induction coils 3 may be arranged such to face the second face. In particular, induction coils 3 may be arranged below support plate 4.

Furthermore, induction cooking appliance 1 may comprise one or more cooking zones 7, each of which comprising at least one induction coil 2.

More specifically, each cooking zone 7 is defined by a respective support portion 8 of support plate 4 carrying, in use, the respective cooking vessel 5 to be heated, and one or more induction coils 2 being adapted to interact (through the respective electromagnetic field) with the respective cooking vessel 5, when, in use being arranged on the respective support portion 8.

According to the specific embodiment disclosed in Figure 1, induction cooking appliance 1 may be designed to provide for dynamic cooking zones 7; i.e. each cooking zone 7 may be defined once the respective cooking vessel 5 is placed on support plate 4 and power supply unit 3 is designed to power induction coils 2 according to the position of the respective cooking vessel 5. Such a configuration also allows a modification of the respective cooking zone 7 if e.g. the position of the respective cooking vessel 5 is modified (see e.g. Figure 1 and the modification of the positioning of cooking vessel 5 from the center-left side of support plate 4 to the upper-right side) during the cooking process.

According to some alternative embodiments, cooking zones 7 could be static; i.e. each cooking zone 7 is defined by one respective fixed support portion 8 and one or more induction coils 2 being fixedly associated to the respective support portion 8.

Additionally, induction cooking appliance 1 may further comprise an user interface 9, in particular operatively coupled to power supply unit 3, designed to receive user input and/or providing information to the user. In particular, user interface 9 may be designed to receive user input relative to the energy input to be directed into induction coils 2. Even more particular, user interface 9 may be configured to receive a heating value/data indicative of a prefixed heating parameter, i.e. cooking temperature, selected by the user.

Advantageously, user interface 9 may be placed within a portion of support plate 4.

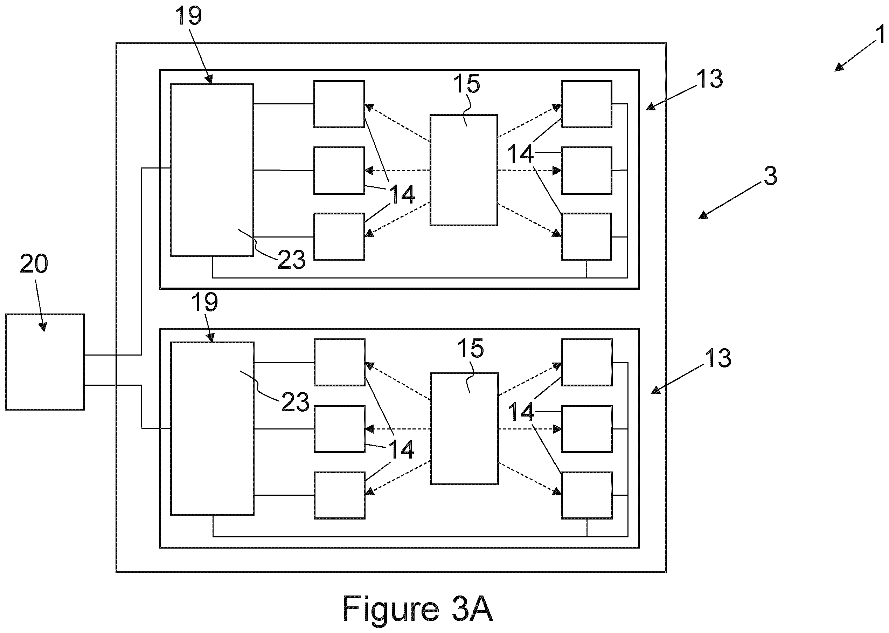

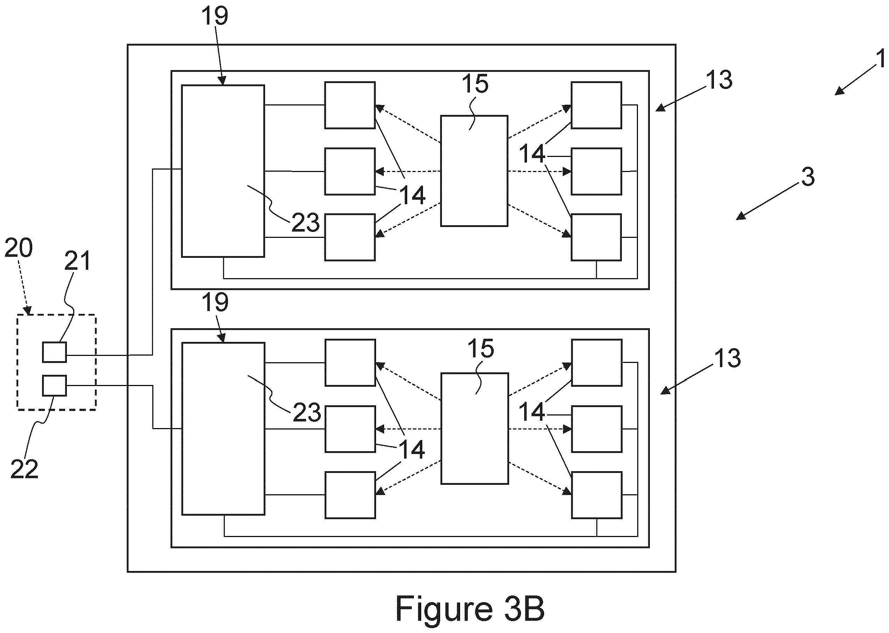

In more detail, power supply unit 3 may be configured to selectively control induction coils 2 by respective AC currents. With particular reference to Figures 2, 3A and 3B, power supply unit 3 comprises one or more power board assemblies 13, each power board assembly 13 being configured to selectively control a plurality of respective induction coils 2.

E.g. the variations shown in Figures 3A and 3B disclose two power board assemblies 13. Alternatively, induction cooking appliance 1 could comprise less or more power board assemblies 13.

Moreover, each power board assembly 13 may comprise at least:
- a plurality of quasi-resonant generators 14, each one connected to at least one respective induction coil 2, in particular for controlling the respective induction coil 2; and
- one control unit 15 coupled to the respective quasi-resonant generators 14 and configured to control operation of the respective quasi-resonant generators 14.

Preferentially, each control unit 15 comprises and/or consists of one respective microcontroller.

Moreover, each control unit 15 is configured to selectively control the respective quasi-resonant generators 14 such that the respective quasi-resonant generators 14 control the respective induction coils 2, and in particular thereby the respective electromagnetic fields.

More specifically, each power board assembly 13 comprises more than four quasi-resonant generators 14. In the specific examples shown in Figures 3A and 3B, each power board assembly 13 comprises six quasi-resonant generators 14.

Accordingly, the number of induction coils 2 can also be larger than four.

It must be understood that power board assemblies 13 must not necessarily comprise the same number of quasi-resonant generators 14. Indeed, the number of quasi-resonant generators 14 may vary from one power board assembly 13 to the other.

Furthermore, each power board assembly 13 may comprise up-to 10 or even more quasi-resonant generators 14.

It should be noted that each power board assembly 13 only comprises generators of the quasi-resonant generator type (quasi-resonant generators 14); i.e. each power board assembly 13 does not comprise other types of generators adapted to command induction coils 2. It is clear that power board assemblies 13 comprise other components different from the quasi-resonant generators 14 such as the already introduced control unit 15, but no other type of generator.

In more detail and with particular reference to Figure 2, each quasi-resonant generator 14 comprises a respective quasi-resonant inverter circuit 16 having a single power switching device 17, in particular a single Insulated Gate Bipolar Transistor.

With respect to Figure 2, it is to be noted that Figure 2 depicts only two quasi-resonant generators 14 of the respective power board assembly 13. The other respective quasi-resonant generators 14 have been omitted for reasons of simplicity.

Furthermore, each power board assembly 13 may comprise a plurality of drivers 18, each one coupled to the respective control unit 15 and one respective quasi-resonant generator 14. In particular, each driver 18 may be configured to control and/or drive the respective quasi-resonant generator 14. Even more particular each driver 18 may be controlled by means of the respective control unit 15 itself so as to control and/or drive the respective quasi-resonant generator 14.

Additionally, each control unit 15 may be configured to selectively send control signals to the respective drivers 18, in particular so that drivers 18 control, in use, the respective quasi-resonant generator 14 in dependence of the control signal.

According to some further non-limiting aspects of the present invention, each power board assembly 13 may comprise one power unit 19 coupled and/or coupleable to an external power supply 20, the respective plurality of quasi-resonant generators 14 and the respective induction coils 2.

It should be noted that external power supply 20 may be provided to a (residential) property from an energy production source such as an electric utility. External power supply 20 may e.g. correspond to a two phase (e.g. 220 volt) alternating current (AC) power supply. It is understood that in addition and/or alternatively, any other external power source 20 can be used such as for example, a one phase (110V) power supply, or a three phase power supply (380 V) and/or a DC power source.

With particular reference to Figure 3A, each power board assembly 13, in particular the respective power unit 19, is electrically connected to the same phase of external power supply 20.

Alternatively and as shown in the variant of Figure 3B, external power supply 20 may comprise a main phase 21 and at least one auxiliary phase 22. According to such a variant, at least one power board assembly 13, in particular the respective power unit 19, may be connected to main phase 21 and at least another power board assembly 13 may be connected to auxiliary phase 22.

More specifically, each power unit 19 may comprise a rectifier 23 being coupled and/or coupleable to external power supply 20 and configured to convert an AC power signal provided by external power supply 20 into a rectified DC power signal. For example, each rectifier 23 may comprise a diode full-bridge for full-wave rectification or a synchronous rectifier with a plurality of switching elements for active rectification and/or any similar rectification circuit.

Moreover, each rectifier 23 may be coupled to the respective plurality of quasi-resonant generators 14 and the respective plurality of induction coils 2.

According to some possible non-limiting embodiments, one or more rectifiers 23 may be configured to be connected to main phase 21 and one or more rectifiers 23 may be connected to auxiliary phase 22.

With particular reference to the embodiment of Figure 1, induction cooking appliance 1 may comprise:
- a detection unit (not shown) configured to detect a position of each cooking vessel 5 on support plate 4; and
- a control device (not shown) (operatively) coupled to the detection unit and power supply unit 3 and configured to control power supply unit 3 as a function of the position of each cooking vessel 5 so as to energize these induction coils 3 being adapted to interact with the respective cooking vessel 5.

In more detail, the control device is connected to each power board assembly 13, in particular the respective control unit 15, as a function of the position of cooking vessel 5 or cooking vessels 5 so as to energize these induction coils 3 being adapted to interact with the cooking vessel 5 or the cooking vessels 5 placed on support plate 4.

Furthermore, when, in use, the control device controls power board assemblies 13, it is possible that one cooking vessel 5 interacts with induction coils 2 being controlled by means of quasi-resonant generators 14 of the same power board assembly 13 and/or one or more different power board assemblies 13.

Additionally, the detection unit may be configured to detect a change of the position of one or more cooking vessels 4. Furthermore, the control device may be configured to control each power board assembly 13 in dependence of the modified position or positions.

With particular reference to Figure 2, power supply unit 9 may comprise a plurality of resonant capacitors 24, each one associated to one respective induction coil 3 so as to form in combination a respective resonator tank 25.

In use, a user places one or more cooking vessels 5 on support plate 4 and power supply unit 3 selectively controls the energy supply to induction coils 2 for generating the heat within the respective cooking vessel 5.

In particular, the respective control units 15 control operation of these induction coils 2, which needs to be energized so as to heat the respective cooking vessels 5.

The detection unit allows to detect the position of cooking vessels 5 and the control device controls power board assemblies 13 according to the detected position(s).

Clearly, changes may be made to induction cooking appliance 1 without, however, departing from the scope of the present invention.

### List of Reference Signs

- 1: Induction cooking appliance
- 2: Induction coil
- 3: Power supply unit
- 4: Support plate
- 5: Cooking vessel
- 6: First face
- 7: Cooking zone
- 8: Support portion
- 9: User interface
- 13: Power board assembly
- 14: Quasi-resonant generator
- 15: Control unit
- 16: Quasi-resonant inverter circuit
- 17: Single power switching device
- 18: Driver
- 19: Power unit
- 20: External power supply
- 21: First phase
- 22: Second phase
- 23: Rectifier
- 24: Resonant capacitor
- 25: Resonant tank

## Claims

1. Induction cooking appliance (1), in particular an induction cooking hob, for the thermal treatment of food products comprising at least:
- a plurality of induction coils (2), each configured to generate a respective electromagnetic field; and
- a power supply unit (3) coupled to the induction coils (3) and configured to selectively control an energy input into the induction coils (3);
wherein the power supply unit (3) comprises at least one power board assembly (13), each power board assembly (13) being configured to selectively control a plurality of respective induction coils (2);
wherein each power board assembly (13) comprises at least a plurality of quasi-resonant generators (14), each one connected to at least one respective induction coil (2) for controlling operation of the respective induction coil (2), and one control unit (15) coupled to the quasi-resonant generators (14) and configured to control operation of the quasi-resonant generators (14);
wherein each power board assembly (13) comprises more than four quasi-resonant generators (14).

2. Induction cooking appliance according to claim 1, wherein each power board assembly (13) only comprises generators (14) of the quasi-resonant generator type.

3. Induction cooking appliance according to claim 1 or 2, wherein at least four induction coils (2) are associated to each power board assembly (13).

4. Induction cooking appliance according to any one of the preceding claims, wherein each quasi-resonant generator (14) comprises a respective quasi-resonant inverter circuit (16) having a single power switching device (17), in particular a single Insulated Gate Bipolar Transistor.

5. Induction cooking appliance according to any one of the preceding claims, wherein each power board assembly (13) comprises a plurality of drivers (18), each one coupled to the respective control unit (15) and one respective quasi-resonant generator (14);
wherein each control unit (15) is configured to selectively send control signals to the respective drivers (18) for driving the respective quasi-resonant generators (14);
wherein each driver (18) is configured to drive the respective quasi-resonant generator (14) in dependence of the control signal.

6. Induction cooking appliance, wherein each power board assembly comprises one power unit (19) coupled and/or coupleable to an external power supply (20) and the respective plurality of quasi-resonant generators (14).

7. Induction cooking appliance according to claim 6, wherein each power unit (19) comprises a rectifier (23) being coupled and/or coupleable to the external power supply (20) and configured to convert an AC power signal provided by the external power supply (20) into a rectified DC power signal;
wherein each rectifier (23) is coupled to the respective plurality of quasi-resonant generators (14) and the respective plurality of induction coils (2).

8. Induction cooking appliance according to claim 7, comprising a plurality of power board assemblies; wherein the respective rectifier units are configured to be connected to the same main phase of the AC power signal or to different phases of the AC power signal.

9. Induction cooking appliance according to any one of the preceding claims, further comprising:
- a support plate (4) for carrying one or more loads (5);
- a detection unit configured to detect a position of each load (5) on the support plate (4); and
- a control device coupled to the detection unit and the one or more power board assemblies (13);
wherein the control device is configured to control the power board assemblies (13) as a function of the position of each load (5) so as to energize these induction coils (2) being adapted to interact with the loads (5).

10. Induction cooking appliance according to claim 9, wherein the detection unit is configured to detect a change of the position of one or more loads (5) and the control device is configured to control the power board assemblies (13) in dependence of the modified position or positions.

11. Induction cooking appliance according to any one of the preceding claims, wherein each control unit (15) comprises and/or consists of a microcontroller.
